# EUROPEAN PATENT APPLICATION

(11) **EP 4 102 899 A1**
(43) Date of publication of application: **14.12.2022**
(21) Application number: 21785490.0
(22) Date of filing: 16.03.2021
(51) Int. Cl.: H04W 56/00

(54) **COMMUNICATION METHOD AND APPARATUS**

(30) Priority: 09.04.2020 CN 202010273524
(71) Applicant: Huawei Technologies Co., Ltd., Shenzhen, Guangdong 518129 (CN)
(72) Inventor: WU, Yedan, Shenzhen, Guangdong 518129 (CN); GENG, Tingting, Shenzhen, Guangdong 518129 (CN)
(74) Representative: Isarpatent
(86) International application number: PCT/CN2021/080977
(87) International publication number: WO 2021/203922

(57) **Abstract**

This application provides a communication method and apparatus. The method includes: A terminal device receives first indication information, where the first indication information includes a common timing advance of at least one candidate cell, and the first indication information is used to inform the terminal device that the at least one candidate cell is in a handover allowed state; and the terminal device sends a random access preamble to a target candidate cell based on a first timing advance, where the target candidate cell is one of the at least one candidate cell, and the first timing advance is a common timing advance of the target candidate cell. According to the method provided in this application, the UE can send the preamble more accurately in a handover scenario.

## Description

This application claims priority to Chinese Patent Application No. 202010273524.3, filed with the China National Intellectual Property Administration on April 9, 2020 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

In current communication technologies, during uplink transmission, different terminal devices (user equipment, UE) perform orthogonal multiple access (orthogonal multiple access) in time and frequency domains, that is, uplink transmission of different UEs from a same cell does not interfere with each other. To ensure orthogonality of uplink transmission and avoid intra-cell (intra-cell) interference, a base station requires that moments at which signals of different UEs in a same subframe but on different frequency domain resources arrive at the base station are generally aligned. To ensure time synchronization on a receive side (base station side), an uplink timing advance (uplink timing advance) mechanism is introduced to long term evolution (long term evolution, LTE)/new radio (new radio, NR).

To adapt to non-terrestrial network (non-terrestrial network, NTN) communication, such as satellite communication, a satellite may be used to broadcast a common timing advance (common timing advance, common TA) to ensure time synchronization on the receive side. However, the common TA mechanism in an existing technology only relates to idle-state UE but does not relate to a handover process of connected-state UE. In addition, since the common TA continuously changes during a flight process of the satellite, the common TA received by the UE is inaccurate merely using the current mechanism.

### SUMMARY

This application provides a communication method and apparatus. A base station sends a common timing advance of a candidate cell, so that a terminal device can send a preamble more accurately in a handover scenario.

According to a first aspect, a communication method is provided. The method includes: A terminal device receives first indication information, where the first indication information includes a common timing advance of at least one candidate cell, and the first indication information is used to inform the terminal device that the at least one candidate cell is in a handover allowed state. The terminal device sends a random access preamble to a target candidate cell based on a first timing advance, where the target candidate cell is one of the at least one candidate cell, and the first timing advance is a common timing advance of the target candidate cell.

The indication information that includes the common timing advance of the candidate cell is received, so that the terminal device can send the preamble more accurately in a handover scenario.

With reference to the first aspect, in some implementations of the first aspect, the first indication information further includes: correspondences between a plurality of common timing advances of the at least one candidate cell and a plurality of moments. The method further includes: The terminal device determines, based on the correspondences, the first timing advance corresponding to a first moment, where the first moment is determined by the terminal device based on a moment at which random access is initiated to one target candidate cell, and the target candidate cell is one of the at least one candidate cell. The indication information that includes the correspondences between the plurality of timing advances and the plurality of moments is received, so that the terminal device can send the preamble more accurately in the handover scenario. This increases a success rate for a base station to process the preamble and increases a success rate for random access.

With reference to the first aspect, in some implementations of the first aspect, the first indication information further includes information about a type of the at least one candidate cell, and the type includes a satellite communication type and/or a non-public network type.

The information about the type of the candidate cell is indicated in the indication information, so that the terminal device can select, based on the information about the type of the candidate cell, a more suitable cell to access. This improves communication quality.

With reference to the first aspect, in some implementations of the first aspect, the first indication information further includes a first preset condition, and the method further includes: The terminal device determines the target candidate cell that meets the preset condition.

With reference to the first aspect, in some implementations of the first aspect, the terminal device receives second indication information sent by the one target candidate cell, where the second indication information includes a second timing advance, and the second timing advance is a positive number or a negative number.

A mechanism that the second timing advance is a positive number or a negative number is introduced to resolve a problem that a reference point is not appropriately selected in an NTN scenario, so that a timing advance received by the terminal device is more accurate.

With reference to the first aspect, in some implementations of the first aspect, the terminal device sends third indication information to the one target candidate cell based on a third timing advance, where the third indication information includes a reconfiguration complete message, and the third timing advance is obtained by adding the first timing advance and the second timing advance.

With reference to the first aspect, in some implementations of the first aspect, the plurality of candidate cells served by a same base station have a same correspondence.

According to a second aspect, a communication method is provided. The method includes: sending first indication information to a terminal device, where the first indication information includes a common timing advance of a candidate base station, and the first indication information is used to inform the terminal device that the at least one candidate cell is in a handover allowed state; and receiving a random access preamble sent by the terminal device based on a first timing advance.

The Indication information that includes the common timing advance of a candidate cell is sent, so that the terminal device can send the preamble more accurately in a handover scenario.

With reference to the second aspect, in some implementations of the second aspect, the first indication information further includes: correspondences between a plurality of common timing advances of the candidate base station and a plurality of moments; and the random access preamble sent by the terminal device based on the first timing advance is received.

The indication information that includes the correspondences between the plurality of common timing advances and the plurality of moments is sent, so that the terminal device can send the preamble more accurately in the handover scenario. This increases a success rate for the base station to process the preamble and increases a success rate for random access.

With reference to the second aspect, in some implementations of the second aspect, the first indication information further includes information about a type of the candidate base station, and the type includes a satellite communication type and/or a non-public network type.

The information about the type of the candidate cell is indicated in the indication information, so that the terminal device can select, based on the information about the type of the candidate cell, a more suitable cell to access. This improves communication quality.

With reference to the second aspect, in some implementations of the second aspect, the first indication information further includes a first preset condition, where the preset condition is used by the terminal device to determine a target candidate base station that meets the preset condition.

With reference to the second aspect, in some implementations of the second aspect, second indication information is sent to the terminal device, where the second indication information includes a second timing advance, the second timing advance is determined by the candidate base station based on the random access preamble, and the second timing advance is a positive number or a negative number.

A mechanism that the second timing advance is a positive number or a negative number is introduced to resolve a problem that a reference point is not appropriately selected in an NTN scenario, so that a timing advance received by the terminal device is more accurate.

According to a third aspect, a communication apparatus is provided. The apparatus includes: a receiving module, configured to receive first indication information, where the first indication information includes a common timing advance of at least one candidate cell, and the first indication information is used to inform the communication apparatus that the at least one candidate cell is in a handover allowed state; and a sending module, configured to send a random access preamble to a target candidate cell based on a first timing advance, where the target candidate cell is one of the at least one candidate cell, and the first timing advance is a common timing advance of the target candidate cell.

The indication information that includes the common timing advance of the candidate cell is received, so that the terminal device can send the preamble more accurately in a handover scenario.

With reference to the third aspect, in some implementations of the third aspect, the first indication information further includes: correspondences between a plurality of common timing advances of the at least one candidate cell and a plurality of moments. The apparatus further includes: a processing module, configured to determine, based on the correspondences, a first timing advance corresponding to a first moment, where the first moment is determined by the communication apparatus based on a moment at which random access is initiated to one target candidate cell, and the target candidate cell is one of the at least one candidate cell.

The indication information that includes the correspondences between the plurality of timing advances and the plurality of moments is received, so that the terminal device can send the preamble more accurately in the handover scenario. This increases a success rate for a base station to process the preamble and increases a success rate for random access.

With reference to the third aspect, in some implementations of the third aspect, the first indication information further includes information about a type of the at least one candidate cell, and the type includes a satellite communication type and/or a non-public network type.

The information about the type of the candidate cell is indicated in the indication information, so that the terminal device can select, based on the information about the type of the candidate cell, a more suitable cell to access. This improves communication quality.

With reference to the third aspect, in some implementations of the third aspect, the first indication information further includes a first preset condition, and the processing module is further configured to determine the target candidate cell that meets the preset condition.

With reference to the third aspect, in some implementations of the third aspect, the receiving module is further configured to: receive second indication information sent by the one target candidate cell, where the second indication information includes a second timing advance, and the second timing advance is a positive number or a negative number.

A mechanism that the second timing advance is a positive number or a negative number is introduced to resolve a problem that a reference point is not appropriately selected in an NTN scenario, so that a timing advance received by the terminal device is more accurate.

With reference to the third aspect, in some implementations of the third aspect, the sending module is further configured to: send third indication information to the one target candidate cell based on a third timing advance, where the third indication information includes a reconfiguration complete message, and the third timing advance is obtained by adding the first timing advance and the second timing advance.

With reference to the third aspect, in some implementations of the third aspect, a plurality of candidate cells served by a same base station have a same correspondence.

According to a fourth aspect, a communication apparatus is provided. The apparatus includes: a sending module, configured to send first indication information to a terminal device, where the first indication information includes a common timing advance of a candidate base station, and the first indication information is used to inform the terminal device that the at least one candidate cell is in a handover allowed state; and a receiving module, configured to receive a random access preamble sent by the terminal device based on a first timing advance.

The indication information that includes the common timing advance of the candidate cell is sent, so that the terminal device can send the preamble more accurately in a handover scenario.

With reference to the fourth aspect, in some implementations of the fourth aspect, the first indication information further includes: correspondences between a plurality of common timing advances of the communication apparatus and a plurality of moments.

The indication information that includes the correspondences between the plurality of common timing advances and the plurality of moments is sent, so that the terminal device can send the preamble more accurately in the handover scenario. This increases a success rate for a base station to process the preamble and increases a success rate for random access.

With reference to the fourth aspect, in some implementations of the fourth aspect, the first indication information further includes information of a type of the communication apparatus, and the type includes a satellite communication type and/or a non-public network type.

The information about the type of the candidate cell is indicated in the indication information, so that the terminal device can select, based on the information about the type of the candidate cell, a more suitable cell to access. This improves communication quality.

With reference to the fourth aspect, in some implementations of the fourth aspect, the first indication information further includes a first preset condition, where the preset condition is used by the terminal device to determine a target candidate base station that meets the preset condition.

With reference to the fourth aspect, in some implementations of the fourth aspect, the sending module is further configured to send second indication information to the terminal device, where the second indication information includes a second timing advance, the second timing advance is determined by the communication apparatus based on the random access preamble, and the second timing advance is a positive number or a negative number.

A mechanism that the second timing advance is a positive number or a negative number is introduced to resolve a problem that a reference point is not appropriately selected in an NTN scenario, so that a timing advance received by the terminal device is more accurate.

According to a fifth aspect, a communication apparatus is provided. The apparatus includes: a receiving module, configured to receive first indication information sent by at least one candidate base station, where the first indication information includes a common timing advance of at least one candidate cell, and the first indication information is used to inform the terminal device that the at least one candidate cell is in a handover allowed state; and a sending module, configured to send the first indication information to the terminal device.

The indication information that includes the common timing advance of the candidate cell is received, so that the terminal device can send a preamble more accurately in a handover scenario. This increases a success rate for the base station to process the preamble and increases a success rate for random access.

With reference to the fifth aspect, in some implementations of the fifth aspect, the first indication information further includes: correspondences between a plurality of common timing advances of the at least one candidate cell and a plurality of moments.

The indication information that includes the correspondences between the plurality of timing advances and the plurality of moments is received, so that the terminal device can send the preamble more accurately in the handover scenario. This increases the success rate for the base station to process the preamble and increases the success rate for random access.

With reference to the fifth aspect, in some implementations of the fifth aspect, the apparatus further includes: a processing module, configured to integrate, before the first indication information is sent to the terminal device, a plurality of pieces of first indication information sent by a plurality of candidate base stations into one piece of first indication information.

With reference to the fifth aspect, in some implementations of the fifth aspect, the first indication information further includes information about a type of the at least one candidate base station, and the type includes a satellite communication type and/or a non-public network type.

The information about the type of the candidate cell is indicated in the indication information, so that the terminal device can select, based on the information about the type of the candidate cell, a more suitable cell to access. This improves communication quality.

With reference to the fifth aspect, in some implementations of the fifth aspect, the first indication information further includes a first preset condition, where the first preset condition is used by the terminal device to determine a target candidate base station that meets the preset condition.

According to a sixth aspect, a communication apparatus is provided, including a processor and a memory. The memory is configured to store a computer program, and the processor is configured to invoke the computer program from the memory and run the computer program, so that the communication device can perform the method according to any one of the first aspect or the possible implementations of the first aspect.

According to a seventh aspect, a communication apparatus is provided, including a processor and a memory. The memory is configured to store a computer program, and the processor is configured to invoke the computer program from the memory and run the computer program, so that the communication device can perform the method according to any one of the second aspect or the possible implementations of the second aspect.

According to an eighth aspect, a computer-readable storage medium is provided, configured to store a computer program. The computer program includes instructions used to perform the method according to any one of the first aspect or the possible implementations of the first aspect.

According to a ninth aspect, a computer-readable storage medium is provided, configured to store a computer program. The computer program includes instructions used to perform the method according to any one of the second aspect or the possible implementations of the second aspect.

According to a tenth aspect, a computer program product is provided, including a computer program. When the computer program is run on a computer device, the computer device is enabled to perform the method according to the first aspect.

According to an eleventh aspect, a computer program product is provided, including a computer program. When the computer program is run on a computer device, the computer device is enabled to perform the method according to the second aspect.

### BRIEF DESCRIPTION OF DRAWINGS

FIG. 1 is a schematic diagram of a random access process in an existing technology;
FIG. 2 is a schematic diagram of a principle of a common TA mechanism in an NTN scenario;
FIG. 3 is a schematic diagram of a communication method according to an embodiment of this application;
FIG. 4 is a schematic flowchart of a handover process according to an embodiment of this application;
FIG. 5 is a schematic flowchart of a conditional handover process according to an embodiment of this application;
FIG. 6 is a schematic diagram of a handover procedure in a CU-DU architecture according to an embodiment of this application;
FIG. 7 is a schematic diagram of a communication apparatus according to an embodiment of this application;
FIG. 8 is a schematic diagram of another communication apparatus according to an embodiment of this application; and
FIG. 9 is a schematic diagram of another communication apparatus according to an embodiment of this application.

### DESCRIPTION OF EMBODIMENTS

The following describes technical solutions of this application with reference to the accompanying drawings.

The technical solutions in embodiments of this application may be applied to various communication systems, for example, a code division multiple access (code division multiple access, CDMA) system, a wideband code division multiple access (wideband code division multiple access, WCDMA) system, a long term evolution (long term evolution, LTE) system, a 5th generation (5th generation, 5G) or new radio (new radio, NR) system, a future evolved communication system, and the like.

In this application, terms "network" and "system" are often used interchangeably. A communication apparatus described in this application refers to a network element in a communication system, for example, a terminal, a base station (a source base station or a target base station), or a core network device.

The terminal device in embodiments of this application may be user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

A base station may also be referred to as a base station device, and is a network device deployed in a radio access network that provides a wireless communication function. The base station may have different names in different radio access systems. For example, a base station in a universal mobile telecommunications system (Universal Mobile Telecommunications System, UMTS) network is referred to as a NodeB (NodeB), a base station in an LTE network is referred to as an evolved NodeB (evolved NodeB, eNB or eNodeB), and a base station in a 5G system may be referred to as a transmission reception point (Transmission Reception Point, TRP) or a gNodeB (gNodeB, gNB). The base station may include one or more co-site or non-co-site TRPs. The base station may alternatively be a radio controller, a centralized unit (centralized unit, CU), and/or a distributed unit (distributed unit, DU) in a cloud radio access network (cloud radio access network, CRAN) scenario. Alternatively, the base station may be a server, a wearable device, a vehicle-mounted device, or a non-terrestrial device such as a satellite. For ease of description, the following uses the base station for description. Optionally, the base station in the present invention may alternatively be user equipment in device to device D2D (Device to Device). Optionally, the base station and the user equipment in the present invention may alternatively be relay devices, or a network device and user equipment that implement a relay function.

The base station may be an architecture in which a centralized unit (centralized unit, CU) is separated from a distributed unit (distributed unit, DU). A RAN may be connected to a core network (for example, an LTE core network or a 5G core network). It may be understood that the CU and the DU are obtained by dividing the base station from the perspective of logical functions. The CU and the DU may be physically separated or deployed together. A plurality of DUs may share one CU. One DU may be connected to a plurality of CUs. The CU and the DU may be connected through an interface, for example, an F1 interface. The CU and the DU may be obtained through division based on protocol layers of a wireless network. For example, a possible division manner is that: The CU is configured to perform functions of a radio resource control (radio resource control, RRC) layer, a service data adaptation protocol (service data adaptation protocol, SDAP) layer, and a packet data convergence protocol (packet data convergence protocol, PDCP) layer; and the DU is configured to perform functions of a radio link control (radio link control, RLC) layer, a media access control (media access control, MAC) layer, a physical (physical) layer, and the like. It may be understood that division of processing functions of the CU and the DU performed based on the protocol layers is merely an example, and there may be other division. For example, the CU or the DU may have functions of more protocol layers through division. For example, the CU or the DU may alternatively have some processing functions of the protocol layers through division. In a design, some functions of the RLC layer and functions of a protocol layer above the RLC layer are configured on the CU, and remaining functions of the RLC layer and functions of a protocol layer below the RLC layer are configured on the DU. In another design, functions of the CU or the DU may alternatively be obtained through division based on service types or other system requirements. For example, division is performed based on latencies, a function whose processing time needs to meet a latency requirement is configured on the DU, and a function whose processing time does not need to meet the latency requirement is configured on the CU. One or more CUs may be centrally or separately disposed. For example, the CUs may be disposed on a network side for ease of centralized management. The DU may have a plurality of radio frequency functions, or the radio frequency functions may be configured remotely. Functions of the CU may be implemented by one entity, or may be implemented by different entities. For example, the functions of the CU may be further divided. For example, a control plane (control panel, CP) is separated from a user plane (user panel, UP), that is, a control plane of the CU (CU-CP) is separated from a user plane of the CU (CU-UP). For example, the CU-CP and the CU-UP may be implemented by different functional entities. The CU-CP and the CU-UP may be coupled to the DU to jointly implement functions of the base station.

During uplink transmission, different UEs perform orthogonal multiple access in time and frequency domains, that is, uplink transmission of the different UEs from a same cell does not interfere with each other. To ensure orthogonality of the uplink transmission and avoid intra-cell interference, the base station requires that moments at which signals of different UEs in a same subframe but on different frequency domain resources arrive at the base station are generally aligned. As long as the base station receives, within a cyclic prefix (cyclic prefix) range, uplink data sent by the UEs, the base station can correctly decode the uplink data. Therefore, uplink synchronization requires that moments at which signals of different UEs in a same subframe arrive at the base station all fall within the cyclic prefix range. To maintain orthogonality between uplink reference signals using different cyclic shifts, moments at which uplink reference signals are received also need to be aligned. This is the reason why uplink synchronization needs to be used to ensure time alignment of uplink transmission of different UEs in a same cell. To ensure time synchronization on a receive side (base station side), an uplink timing advance (uplink timing advance) mechanism is introduced to LTE/NR. From a perspective of a UE side, a timing advance is essentially a negative offset (negative offset) between a start moment at which a downlink subframe is received and a moment at which an uplink subframe is transmitted. The base station may control, by properly controlling an offset of each UE, moments at which uplink signals from different UEs reach the base station. For example, UE farther away from the base station has a higher transmission delay. Therefore, the UE farther away from the base station needs to send uplink data earlier than UE closer to the base station.

The base station informs the UE of a TA of the UE in two manners. In a random access process, the base station determines a TA value by measuring a received preamble (preamble), and sends the timing advance to the UE via a random access response (random access response, RAR). This process is an "initial uplink synchronization process". In a connected state, the base station needs to maintain timing advance information. Theoretically, any signal (SRS/DMRS/CQI/ACK/NACK/PUSCH...) sent by the UE may be used to measure the timing advance. The UE side stores a latest TA adjustment value N_{TA,old}. After receiving a new timing advance command to obtain T_{A}, the UE calculates a latest TA adjustment value N_{TA,new} = N_{TA,old} + (T_{A}31) ^{∗} 16 (unit: Tₛ).

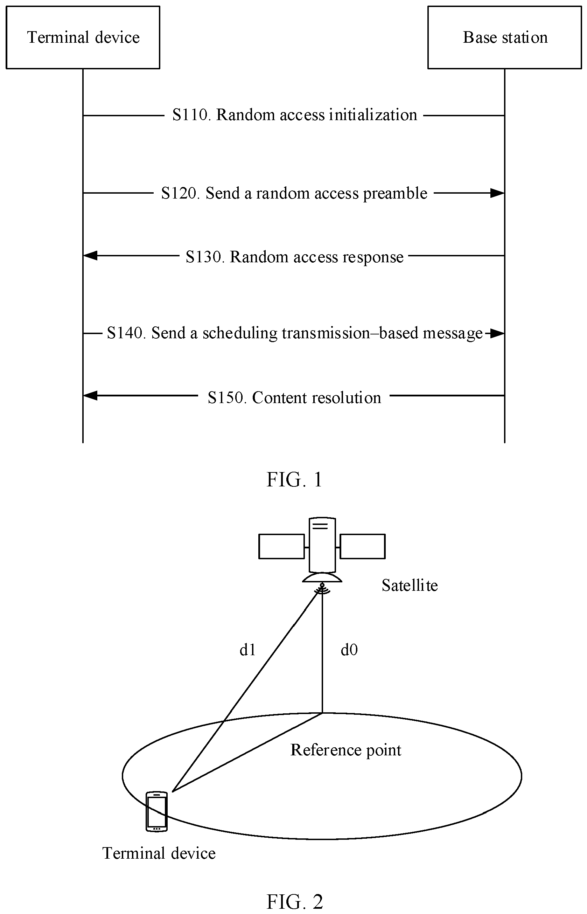

Specifically, FIG. 1 is a schematic flowchart in which a base station informs UE of a TA of the UE in a random access process in an existing technology. As shown in FIG. 1, the random access process includes steps S110 to S150. S110. Initialize random access. In this step, parameters are configured, where the parameters may include: a physical random access channel (physical random access channel, PRACH) resource set for transmitting a random access preamble (random access preamble, RAP), an available random access preamble group (group A or group B) and an available preamble set in each group, a maximum quantity of transmissions of the preamble, an initial transmit power of the preamble, a power ramping step, a random access response window, a maximum quantity of retransmissions of a hybrid automatic repeat request (hybrid automatic repeat request, HARQ) of a third message, a contention resolution timer, and the like. S120. A terminal device sends the random access preamble to a network device, where the random access preamble is mainly used to notify the network device that there is a random access request, and enable the network device to estimate a transmission delay between the network device and the terminal device, so that the access network device can calibrate an uplink timing (uplink timing) advance, and inform the terminal device of the calibrated information via a timing advance command (timing advance command). S130. The terminal device receives a random access response (random access response, RAR) sent by the network device, where the RAR includes an uplink timing advance, and the uplink timing advance is determined by the network device based on the received random access preamble. S140. The terminal device sends a scheduled transmission (scheduled transmission)-based message to the network device. S150. The terminal device receives a contention resolution message sent by the network device, to confirm that the random access process succeeds.

To shorten a random access delay, in addition to a conventional 4-step random access method, a 5G NR system further supports a 2-step random access method. The 2-step random access method includes: A terminal device sends a first message to a base station, where the first message may include a preamble and/or a demodulation reference signal (demodulation reference signal, DMRS); and the base station sends a second message to the terminal device, where the second message may include a response message, and the response message may include information about a temporary C-RNTI, information about a timing advance command (TA command), uplink grant information, a contention resolution identifier, and the like. Because the 2-step random access method belongs to the existing technology, details are not described in this application.

Embodiments of this application are also applicable to the 2-step random access method as well as the 4-step random access method in FIG. 1.

Satellite communication (non-terrestrial network, NTN) is also referred to non-terrestrial communication. Thanks to the current concept of "anytime and anywhere" communication, a satellite communication network is playing a more important role in future. Generally, a higher orbit of a satellite indicates a larger coverage area of the satellite but a longer communication delay. Generally, there may be the following types of orbits of satellites classified by altitudes: a low earth orbit (low earth orbit, LEO), a middle earth orbit (middle earth orbit, MEO), and a geostationary earth orbit (geostationary earth orbit, GEO), where an orbit altitude of the LEO ranges from 160 km to 2000 km, an orbit altitude of the MEO ranges from 2000 km to 35786 km, and an orbit altitude of the GEO is 35786 km. A position of a satellite in the GEO with respect to the earth is unaffected by earth rotation. A LEO communication satellite is closer to the ground, and has a shorter communication delay and a higher data transmission rate. In addition, a weight and size of a mobile terminal are almost the same as those of a personal mobile device. Therefore, the LEO communication satellite is more suitable for the popularization of the mass market and become a hot topic of the current industry development.

Because of a long delay of satellite communication, a timing advance mechanism designed in a current NR system is not applicable to the satellite communication. In the timing advance mechanism in the existing technology, a TA value ranges from 0 to 3486, and a TA value indicates a length of 39 m in case of a 30 kHz PRACH subcarrier, and indicates a length of 78 m in case of a 15 kHz PRACH subcarrier. However, in a random access process in the existing technology, a coverable range for a timing advance that is carried in a random access response message and that is sent by a base station to UE is about 300 km, while an orbit altitude of a satellite in satellite communication ranges from 160 km to 2000 km. It is obvious that the timing advance mechanism in the existing technology cannot adapt to the satellite communication. To adapt to the satellite communication, in the existing technology, a method for broadcasting a common TA by a satellite may be used by UE to obtain a timing advance of the UE. FIG. 2 is a schematic diagram of a principle of a common TA mechanism in an NTN scenario. Specifically, a terrestrial reference point (reference point) is selected for a satellite, which is generally a point closest to the satellite. A distance between the point and the satellite is d0, which indicates that a TA for the distance is a common TA. A TA sent by a base station to UE is a UE-specific TA in FIG. 2. Because a TA value becomes smaller by subtracting the distance of the common TA from the TA value, 12 bits in a timing advance command field in an RAR may be used to represent the TA value. Subsequently, the UE may obtain, based on the UE-specific TA and the common TA, a TA value for sending data.

However, the current common TA mechanism relates only to random access of idle-state UE. In the common TA mechanism, the UE is notified of the common TA by broadcasting the common TA using a satellite, and then the UE sends a random access preamble to a target cell based on the received common TA, to initiate the random access process shown in FIG. 1. In the random access process, the base station notifies the UE of a TA of the UE. However, in the satellite communication scenario, the common TA has not been applied to random access in a handover process of connected-state UE. If information about the common TA only is sent to the UE as a handover acknowledgment message, the common TA continuously changes in a flight process of the satellite. Therefore, the common TA received by the UE is inaccurate.

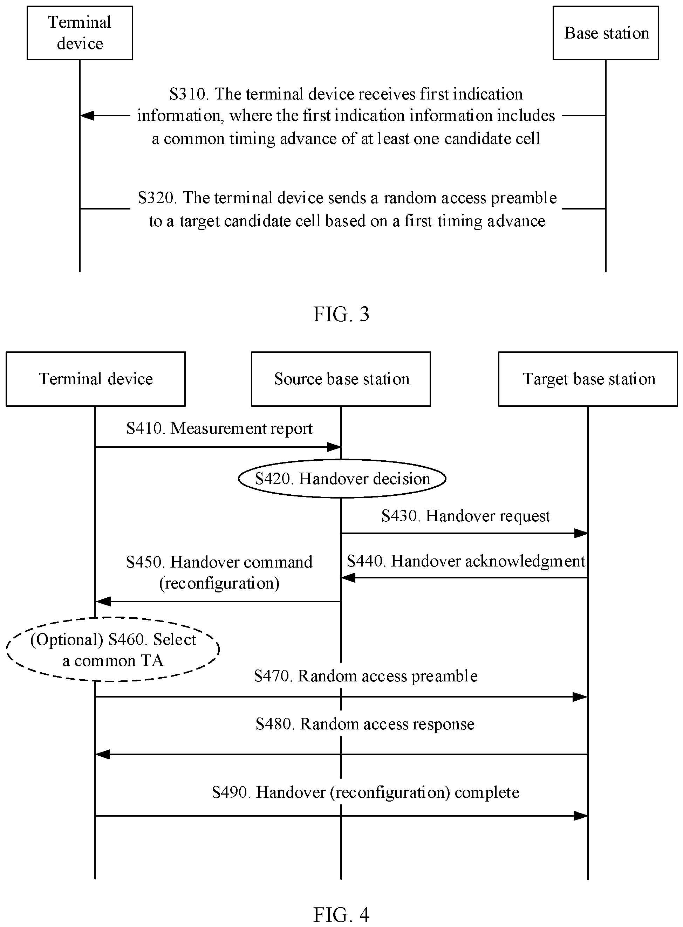

In embodiments of this application, indication information that includes a common timing advance of at least one candidate cell is sent to UE, and the UE can send a random access preamble to a target candidate cell based on the received common timing advance. This increases a success rate for a base station to process the preamble and then increases a success rate for random access in a handover process. As shown in FIG. 3, the method 300 includes steps S310 and S320. The following describes these steps in detail.

S310. A terminal device receives first indication information, where the first indication information includes a common timing advance of at least one candidate cell.

It should be understood that the first indication information is used to inform the terminal device that the at least one candidate cell is in a handover allowed state.

Optionally, the first indication information may be at least one piece of first indication information sent by a base station serving the at least one candidate cell.

Optionally, the first indication information may be sent by the base station serving the at least one candidate cell via a handover acknowledgment message. It should be understood that the handover acknowledgment message is received by a source base station of a currently connected cell, and the source base station transparently transmits the handover acknowledgment message to the terminal device. Optionally, the source base station may convert the handover acknowledgment message into a handover command or an RRC reconfiguration message, and send the handover command or the RRC reconfiguration message to the terminal device. It should be understood that the candidate cell may be a target cell in a common handover process, or may be one of at least one candidate cell in a conditional handover process.

Further, the first indication information may further include correspondences between a plurality of common timing advances of the at least one candidate cell and a plurality of moments. It should be understood that the candidate cell may be a target cell in the common handover process, or may be one of the at least one candidate cell in the conditional handover process.

Optionally, the plurality of moments may be absolute moments, or may be relative moments, for example, a system frame number SFN. The correspondences between the plurality of timing advances and the plurality of moments may be in a form of a list, as shown in Table 1. Alternatively, the correspondences may be mapping relationships, for example, common TA=SFN^{∗}100+6000.

**Table 1 Correspondences between timing advances and moments**

| Index (index) | Common TA | Moment (SFN) |
|---|---|---|
| 1 | 6000 | 10 |
| 2 | 6500 | 11 |
| 3 | 7000 | 12 |
| ... | ... | ... |

Optionally, the first indication information may include information about a type of at least one candidate cell, and the type may include a satellite communication type and/or a non-public network type. The information about the type may be NTN-related information, for example, a GEO cell and an LEO cell (for example, a fixed cell mode and a moving cell mode); or may be non-public network (non-public network, NPN)-related information, for example, a standalone non-public network (standalone non-public network, SNPN) cell, or a closed access group (closed access group, CAG) cell. Optionally, the information about the type may further include an identifier. For example, the SNPN cell may include a standalone non-public network identifier (standalone non-public network identifier, SNPN ID), and the CAG cell may include a CAG ID.

Optionally, the first indication information may further include priority information of a cell type. The priority information of the cell type may represent a priority of a specific type of candidate cell. For example, the first indication information may indicate that an NTN cell is in a first priority, an NPN cell is in a second priority, and a PLMN cell (a public-network cell) is in a third priority. That is, the source base station considers that priorities of a plurality of candidate cells are arranged as: the NTN cell > the NPN cell > the PLMN cell. After the terminal device receives the first indication information that includes the priority information, when both a high-priority type of a cell and a low-priority type of cell meet a handover condition, the terminal device may preferentially select the high-priority candidate cell as a target cell of the terminal device.

The type information of a candidate cell is added in the indication information, so that the terminal device can select, before handover, a more suitable cell to access. This improves communication quality.

Optionally, the type information may be applied to a common TA mechanism in an NTN scenario, or may be applied to cell handover of a terrestrial base station. This is not limited in this application.

S320. The terminal device sends a random access preamble to a target candidate cell based on a first timing advance.

It should be understood that the target candidate cell is one of the at least one candidate cell, and the first timing advance is a common timing advance of the target candidate cell.

Optionally, when the first indication information includes the correspondences, S320 may further include: The terminal device determines, based on the correspondences, the first timing advance corresponding to a first moment, where the first moment is determined by the terminal device based on a moment at which random access is initiated to one target candidate cell, and the one target candidate cell is one of the at least one candidate cell.

It should be understood that moments in the correspondences between the plurality of common timing advances and the plurality of moments are discretely distributed, and the moment at which the terminal device initiates random access may be any moment. Therefore, the terminal device may select, based on the moment at which the terminal device initiates random access, a suitable moment and a corresponding timing advance from the correspondences.

Optionally, the terminal device may determine the first moment based on the moment at which the random access is initiated, to determine a corresponding timing advance. For example, the first moment may be 10, and a common TA corresponding to the moment is 6000.

Optionally, in the conditional handover process, before sending the preamble to one target candidate cell, the terminal device may further determine, based on a preset condition (for example, signal strength of a source cell and a candidate cell, channel quality of the source cell and the candidate cell, location information of UE, and location information of a candidate base station) in the first indication information, the target candidate cell that meets the preset condition.

Optionally, after receiving the random access preamble sent by the terminal device, the base station serving the target candidate cell may send second indication information to the terminal device via a TA command in an RAR. The second indication information may include a second timing advance, where the second timing advance may be determined by the base station based on the random access preamble.

Optionally, the second timing advance may be a positive number or a negative number. Specifically, in the existing technology, the common TA has been considered by the base station in the second timing advance that is determined based on the preamble sent by the terminal device. Generally, the second timing advance is obtained by subtracting the common TA from the TA of UE, for example, the UE-specific TA in FIG. 2. In the existing technology, when a satellite selects a reference point, the selected reference point is a point closest to the ground by default. Therefore, the second timing advance obtained by the base station is always a positive number. However, if the selected reference point is not a shortest distance between the satellite and the ground, the common TA is greater than an actual TA of the UE. In this case, a TA carried in an RAR may be a negative number. However, in the existing mechanism, the TA carried in the RAR is always a positive number, and therefore, a negative TA value may be introduced.

Optionally, after receiving the second timing advance sent by one target candidate cell, the terminal device may obtain a third timing advance by adding the first timing advance and the second timing advance, and send third information to one target candidate cell based on the third timing advance to inform the terminal device that the handover of a to-be-accessed cell is completed. Optionally, the third message may be a reconfiguration complete message, or an RRC connection request message, an RRC connection re-establishment request, a C-RNTI MAC control element, and the like. In this application, the third message may be a C-RNTI MAC control element.

Optionally, a plurality of candidate cells served by a same base station have a same correspondence. For example, the correspondences shown in Table 1 or the formula common TA=SFN^{∗}100+6000 may be used.

Optionally, the correspondences between the plurality of common timing advances and the plurality of moments in this embodiment of this application may be applied to a cell handover process of connected-state UE, or may be applied to a random access process of idle-state UE. This is not limited in this application.

It should be understood that, in this embodiment of this application, the indication information sent by the base station may be sent to one terminal device or a plurality of terminal devices. If the base station sends the indication information to a plurality of terminal devices, the indication information may further include group identifiers, group indexes, and intra-cell identifiers of a plurality of UEs. The quantity of terminal devices is not limited in this application.

In a mobile communication system, a handover process of a connected-state UE is handed over to another cell is controlled by a network device. The network device indicates the UE to be handed over to a target cell by sending the handover acknowledgment message. Specifically, FIG. 4 is a schematic flowchart of a handover process according to an embodiment of this application. As shown in FIG. 4, UE performs cell measurement based on a measurement configuration previously delivered by a base station, and the UE sends a measurement report to the base station when a condition for measurement reporting is met. S420. The base station determines handover based on the measurement configuration reported by the UE, and determines a target cell. Optionally, the target cell may also be referred to as a candidate cell. S430. A source base station to which a currently connected cell belongs sends a handover request message to a target base station to which the target cell belongs. S440. The target base station sends a handover acknowledgment message to the source base station. The target base station determines, based on a situation such as a quantity of connections of the target cell, whether to allow access of the UE. If access of the UE is allowed, the target base station sends the handover acknowledgment message to the source base station, where the handover acknowledgment message includes a common timing advance of the target cell, and may further include correspondences between a plurality of common timing advances of the target cell and a plurality of moments. Optionally, the handover acknowledgment message may further include information about a type of the target cell. For example, the type may include a satellite communication type and/or a non-public network type. The information about the type may be NTN-related information, for example, a GEO cell and an LEO cell (for example, a fixed cell mode and a moving cell mode); or may be non-public network (non-public network, NPN)-related information, for example, a standalone non-public network (standalone non-public network, SNPN) cell or a closed access group (Closed Access Group, CAG). Optionally, the information about the type may further include an identifier. For example, the SNPN cell may include a standalone non-public network identifier (standalone non-public network identifier, SNPN ID), and the CAG cell may include a CAG ID. Optionally, the handover acknowledgment message may further include priority information of a cell type. The priority information of the cell type may represent a priority of a specific type of candidate cell. For example, the handover acknowledgment message may indicate that an NTN cell is in a first priority, an NPN cell is in a second priority, and a PLMN cell (a public-network cell) is in a third priority. That is, the source base station considers that priorities of a plurality of candidate cells are arranged as: the NTN cell > the NPN cell > the PLMN cell. After the terminal device receives the handover acknowledgment message that includes the priority information, when both a high-priority type of a cell and a low-priority type of cell meet a handover condition, the terminal device may preferentially select the high priority candidate cell as a target cell of the terminal device.

S450. The source base station sends to the UEs a handover command message, that is, an RRC reconfiguration message. Content included in the handover command message is from the handover acknowledgment message in S440, which is equivalent to that the layer of the source base station is transparent. (Optional) S460. If received indication information includes the correspondences between the plurality of common TAs of the target cell and the plurality of moments, the UE selects, based on a moment at which random access is initiated, a suitable common TA as a TA for sending a preamble. If the indication information includes only a common timing advance of the target base station, this step may be omitted. S470. The UE sends the preamble to the target base station based on the selected common TA, and attempts to perform random access. S480. The base station places, based on the received preamble, a TA that needs to be adjusted by the UE in an RAR. The TA may be a positive number or a negative number. S490. The UE may obtain, based on the TA in the received RAR and the common TA used for sending the preamble, a TA used for sending a reconfiguration complete message.

Optionally, the foregoing embodiment of this application may be applied to an NTN scenario, for example, a scenario in which the LEO/GEO serves as an independent base station and is connected to a core network, or a scenario in which an LEO/GEO serves as a relay base station and is connected to a terrestrial base station. This is not limited in this application.

The indication information that includes the common timing advance is sent to the terminal device, so that the terminal device can accurately send the preamble in a handover scenario. This increases a success rate for the base station to process the preamble and further increases a success rate for random access.

Further, the indication information that includes the correspondences between the plurality of common timing advances and the plurality of moments is sent to the terminal device, so that the terminal device can send the preamble more accurately in the handover scenario. This increases the success rate for the base station to process the preamble and further increases the success rate for random access.

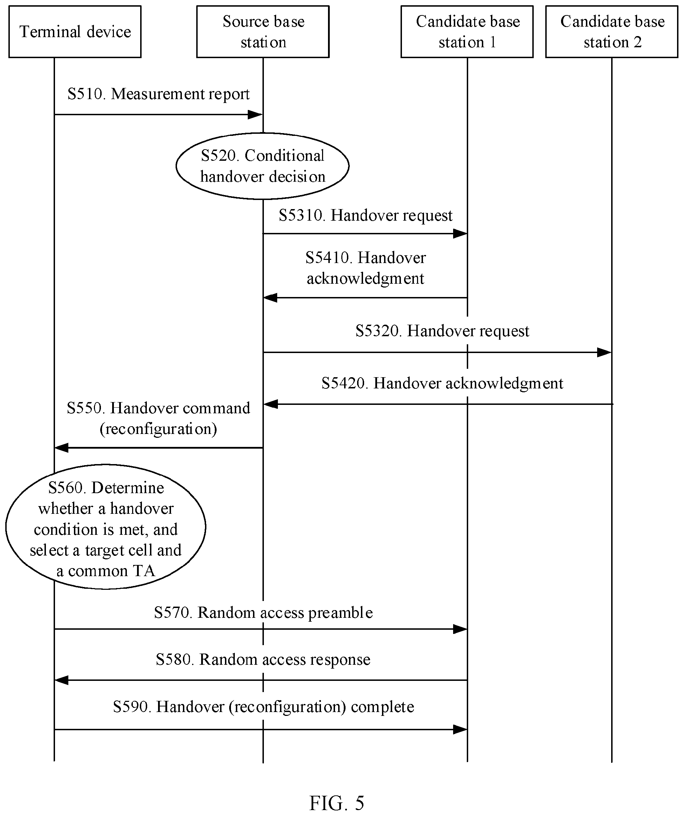

Based on the foregoing handover mechanism, in the existing technology, a conditional handover (conditional handover, CHO) mechanism is provided to increase a handover success rate. A source base station sends CHO configuration information to UE when quality of a source link is good. The CHO configuration information may include a CHO trigger condition, and information about one or more to-be-accessed cells (for example, a cell global identifier (cell global identifier, CGI) of a candidate cell, or a physical cell identifier (physical cell identifier, PCI) of the candidate cell and frequency information corresponding to the candidate cell). Specifically, FIG. 5 is a schematic flowchart of a conditional handover process according to an embodiment of this application. As shown in FIG. 5, UE performs measurement based on a measurement configuration previously delivered by a base station, and the UE sends a measurement report to the base station when a condition for measurement reporting is met. S520. The source base station determines, based on the measurement report of the UE, to enable the UE to perform conditional handover. S530. The source base station sends a handover request to a plurality of candidate base stations. S540. The plurality of candidate base stations determine, based on their own conditions, whether to allow the UE to access, and each send a handover acknowledgment message. Content included in the message is the same as that in the embodiment shown in FIG. 4, and details are not described herein again. Optionally, the handover acknowledgment message may further include a handover condition, where the handover condition may include, for example, signal strength of a source cell and a candidate cell, channel quality of the source cell and the candidate cell, location information of the UE, and location information of the candidate base stations. S550. The source base station sends a conditional handover command (which is also an RRC reconfiguration message), where the handover command includes the handover acknowledgment message in S540, which is equivalent to that the layer of the source base station is transparent. The handover command may include a common timing advance of a cell of each candidate base station, or correspondences between a plurality of common timing advances of a cell of each candidate base station and a plurality of moments, and a condition for the UE to perform a handover. Optionally, the source base station may also place handover acknowledgment messages sent by the plurality of candidate base stations into a same conditional handover command. S560. When determining that a current situation meets the handover condition, the UE selects an appropriate target candidate cell, and selects, based on a common timing advance of a target candidate cell in the handover message or based on correspondences between a plurality of common TAs of the target candidate cell and a plurality of moments, a suitable common TA for sending a preamble. Remaining steps are the same as those in FIG. 4, and details are not described herein again.

Optionally, the foregoing embodiment of this application may be applied to an NTN scenario, for example, a scenario in which an LEO/GEO serves as an independent base station and is connected to a core network, or a scenario in which an LEO/GEO serves as a relay base station and is connected to a terrestrial base station. This is not limited in this application.

Each of the candidate base stations sends, to the terminal device, indication information that is of a cell served by this base station and that includes the correspondences between the plurality of common timing advances and the plurality of moments, so that the terminal device can send the preamble more accurately in the handover scenario. This increases a success rate for the base station to process the preamble and further increases a success rate for random access.

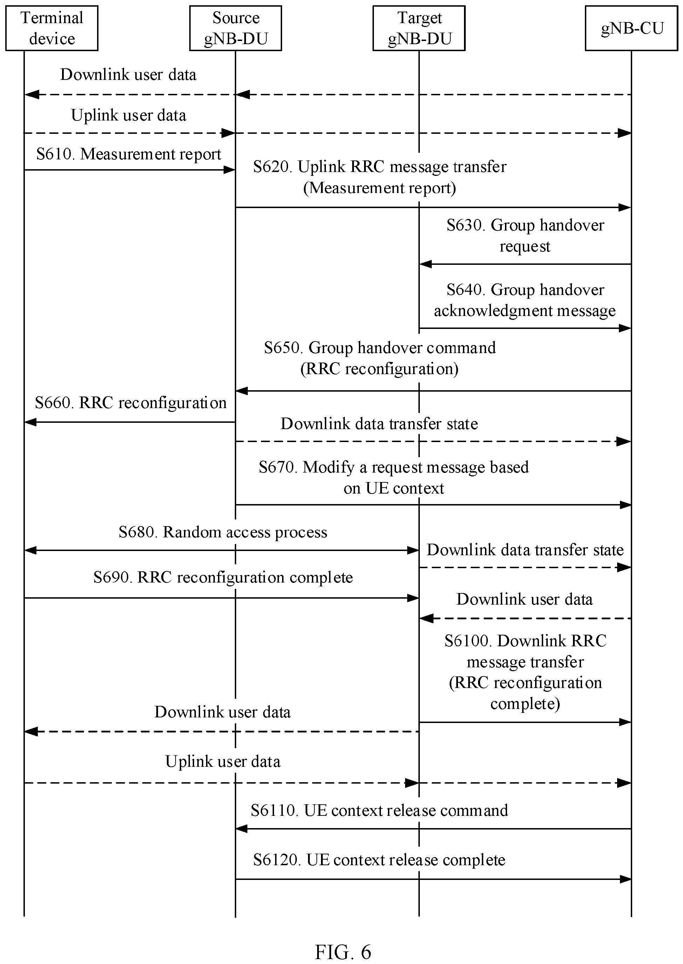

FIG. 6 is a schematic diagram of a handover procedure in a CU-DU architecture according to an embodiment of this application. Refer to FIG. 6. S610. UE performs measurement based on a measurement configuration previously delivered by a base station, and the UE sends a measurement report to a source DU when a condition for measurement reporting is met. S620. The source DU sends a measurement report to a CU optionally via an uplink RRC message transfer message. S630. The CU sends a group handover request to a target DU, where the target DU may also be referred to as a candidate DU, and optionally, establishes a request message based on UE context. S640. The target DU sends a group handover acknowledgment message to the CU, where the message includes a common timing advance of a cell of the target DU, and optionally, the handover acknowledgment message may further include correspondences between a plurality of common timing advances of the cell of the target DU and a plurality of moments. S650. The CU sends a group handover command to the source DU, and optionally, modifies the request message based on the UE context. S660. The source DU sends to UEs a handover command message, namely, an RRC reconfiguration message, where the handover command message may include the common timing advance of the cell of the target DU, or may further include the correspondences between the plurality of timing advances of the target DU and the plurality of moments. S670. Modify a response message based on the UE context. S680. The UE selects a suitable timing advance to establish a random access process with the target DU. S690. The target DU sends a group handover complete message optionally via an uplink RRC message transfer message. S6100. The target DU sends an RRC reconfiguration complete message to the CU. S6100. The CU sends a UE context release command to the source DU. S6120. The source DU sends a UE context release complete message to the CU.

The foregoing embodiment of this application relates to an intra-CU handover procedure. Optionally, the cell handover may alternatively be inter-CU handover. A handover process thereof is similar to the process in FIG. 4, and a difference lies in that there is interaction between an internal CU and an internal DU, where interaction information is consistent with that in the intra-CU handover shown in FIG. 6. Details are not described herein again.

Optionally, the foregoing embodiment of this application may be applied to an NTN scenario, for example, a scenario in which an LEO/GEO serves as a relay base station and is connected to a terrestrial DU, or a scenario in which an LEO serves as a DU and is connected to a terrestrial CU. This is not limited in this application.

The indication information that is of a to-be-accessed DU and that includes the correspondences between the plurality of timing advances and the plurality of moments is sent to the terminal device, so that the terminal device can send the preamble more accurately in the handover scenario. This increases a success rate for the base station to process the preamble and further increases a success rate for random access.

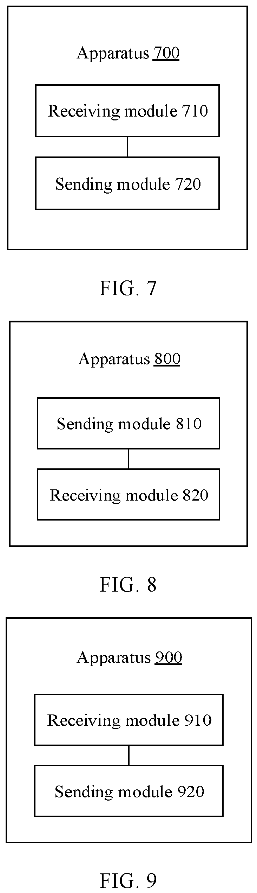

FIG. 7 is a schematic diagram of a communication apparatus according to an embodiment of this application. As shown in FIG. 7, the apparatus 700 includes a receiving module 710 and a sending module 720.

The receiving module is configured to receive first indication information, where the first indication information includes a common timing advance of at least one candidate cell, and the first indication information is used to inform the apparatus 700 that the at least one candidate cell is in a handover allowed state. The sending module is configured to send a random access preamble to a target candidate cell based on a first timing advance, where the target candidate cell is one of the at least one candidate cell, and the first timing advance is a common timing advance of the target candidate cell.

Optionally, the first indication information further includes: correspondences between a plurality of common timing advances of the at least one candidate cell and a plurality of moments. The apparatus further includes: a processing module, configured to determine, based on the correspondences, the first timing advance corresponding to a first moment, where the first moment is determined by the apparatus 700 based on a moment at which random access is initiated to one target candidate cell, and the target candidate cell is one of the at least one candidate cell.

Optionally, the first indication information further includes information about a type of the at least one candidate cell, and the type includes a satellite communication type and/or a non-public network type.

Optionally, the first indication information further includes a first preset condition, and the processing module is further configured to determine the target candidate cell that meets the preset condition.

Optionally, the receiving module is further configured to: receive second indication information sent by the one target candidate cell, where the second indication information includes a second timing advance, and the second timing advance is a positive number or a negative number.

Optionally, the sending module is further configured to: send third indication information to the one target candidate cell based on a third timing advance, where the third indication information includes a reconfiguration complete message, and the third timing advance is obtained by adding the first timing advance and the second timing advance.

Optionally, the plurality of candidate cells served by a same base station have a same correspondence.

The communication apparatus 700 may alternatively be implemented in another manner, for example, implemented by using at least one processor, a memory, and a transceiver. Functions of the receiving module 710 and the sending module 720 may be implemented by using the transceiver.

FIG. 8 is a schematic diagram of another communication apparatus according to an embodiment of this application. As shown in FIG. 8, the apparatus 800 includes a sending module 810 and a receiving module 820.

The sending module is configured to send first indication information to a terminal device, where the first indication information includes a common timing advance of the apparatus 800, and the first indication information is used to inform the terminal device that the at least one candidate cell is in a handover allowed state. The receiving module is configured to receive a random access preamble sent by the terminal device based on a first timing advance.

Optionally, the first indication information further includes: correspondences between a plurality of common timing advances of the apparatus 800 and a plurality of moments.

Optionally, the first indication information further includes information about a type of the apparatus 800, and the type includes a satellite communication type and/or a non-public network type.

Optionally, the first indication information further includes a first preset condition, where the preset condition is used by the terminal device to determine a target candidate base station that meets the preset condition.

Optionally, the sending module is further configured to: send second indication information to the terminal device, where the second indication information includes a second timing advance, the second timing advance is determined by the apparatus 800 based on the random access preamble, and the second timing advance is a positive number or a negative number.

The communication apparatus 800 may alternatively be implemented in another manner, for example, implemented by using at least one processor, a memory, and a transceiver. Functions of the sending module 810 and the receiving module 820 may be implemented by using the transceiver.

FIG. 9 is a schematic diagram of another communication apparatus according to an embodiment of this application. As shown in FIG. 9, the apparatus 900 includes a receiving module 910 and a sending module 920.

The receiving module is configured to receive first indication information sent by at least one candidate base station, where the first indication information includes a common timing advance of at least one candidate cell, and the first indication information is used to inform the terminal device that the at least one candidate cell is in a handover allowed state. The sending module sends the first indication information to the terminal device.

Optionally, the first indication information further includes: correspondences between a plurality of common timing advances of the at least one candidate cell and a plurality of moments.

Optionally, the apparatus further includes: a processing module, configured to integrate, before the first indication information is sent to the terminal device, a plurality of pieces of first indication information sent by a plurality of candidate base stations into one piece of first indication information.

Optionally, the first indication information further includes information about a type of the at least one candidate base station, and the type includes a satellite communication type and/or a non-public network type.

Optionally, the first indication information further includes a first preset condition, where the first preset condition is used by the terminal device to determine a target candidate base station that meets the preset condition.

The communication apparatus 900 may alternatively be implemented in another manner, for example, implemented by using at least one processor, a memory, and a transceiver. Functions of the receiving module 910 and the sending module 920 may be implemented by using the transceiver.

In the several embodiments provided in this application, it should be understood that the disclosed apparatuses and methods may be implemented in other manners. For example, the described apparatus embodiments are merely examples. For example, module division is merely logical function division and there may be other division in an actual implementation.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

## Claims

1. A communication method, comprising:
receiving, by a terminal device, first indication information, wherein the first indication information comprises a common timing advance of at least one candidate cell, and the first indication information is used to inform the terminal device that the at least one candidate cell is in a handover allowed state; and
sending, by the terminal device, a random access preamble to a target candidate cell based on a first timing advance, wherein the target candidate cell is one of the at least one candidate cell, and the first timing advance is a common timing advance of the target candidate cell.

2. The method according to claim 1, wherein the first indication information further comprises:
correspondences between a plurality of common timing advances of the at least one candidate cell and a plurality of moments; and
the method further comprises:
determining, by the terminal device based on a first correspondence, the first timing advance corresponding to a first moment, wherein the first moment is determined by the terminal device based on a moment at which random access is initiated to one target candidate cell, the target candidate cell is one of the at least one candidate cell, and the first correspondence is a correspondence of the target candidate cell.

3. The method according to claim 1 or 2, wherein the first indication information further comprises information about a type of the at least one candidate cell, and the type comprises a satellite communication network type and/or a non-public network type.

4. The method according to any one of claims 1 to 3, wherein the first indication information further comprises a first preset condition, and the method further comprises:
determining, by the terminal device, the target candidate cell that meets the preset condition.

5. The method according to any one of claims 1 to 4, wherein the method further comprises:
receiving, by the terminal device, second indication information sent by the one target candidate cell, wherein the second indication information comprises a second timing advance, and the second timing advance is a positive number or a negative number.

6. The method according to claim 5, wherein the method further comprises:
sending, by the terminal device, third indication information to the one target candidate cell based on a third timing advance, wherein the third indication information comprises a reconfiguration complete message, and the third timing advance is obtained by adding the first timing advance and the second timing advance.

7. The method according to any one of claims 1 to 6, wherein a plurality of candidate cells served by a same base station have a same correspondence.

8. A communication method, comprising:
sending first indication information to a terminal device, wherein the first indication information comprises a common timing advance of a candidate base station, and the first indication information is used to inform the terminal device that the at least one candidate cell is in a handover allowed state; and
receiving a random access preamble sent by the terminal device based on a first timing advance.

9. The method according to claim 8, wherein the first indication information further comprises: correspondences between a plurality of common timing advances and a plurality of moments of the candidate base station.

10. The method according to claim 8 or 9, wherein the first indication information further comprises information about a type of the candidate base station, the type comprises a satellite communication network type and/or a non-public network type.

11. The method according to any one of claims 8 to 10, wherein the first indication information further comprises a first preset condition, and the preset condition is used by the terminal device to determine a target candidate base station that meets the preset condition.

12. The method according to any one of claims 8 to 11, wherein the method further comprises:
sending, to the terminal device, second indication information, wherein the second indication information comprises a second timing advance, the second timing advance is determined by the candidate base station based on the random access preamble, and the second timing advance is a positive number or a negative number.

13. A communication apparatus, comprising:
a receiving module, configured to receive first indication information, wherein the first indication information comprises a common timing advance of at least one candidate cell, and the first indication information is used to inform the communication apparatus that the at least one candidate cell is in a handover allowed state; and
a sending module, configured to send a random access preamble to a target candidate cell based on a first timing advance, wherein the target candidate cell is one of the at least one candidate cell, and the first timing advance is a common timing advance of the target candidate cell.

14. The apparatus according to claim 13, wherein the first indication information further comprises:
correspondences between a plurality of common timing advances of the at least one candidate cell and a plurality of moments; and
the apparatus further comprises:
a processing module, configured to determine, based on the correspondences, the first timing advance corresponding to a first moment, wherein the first moment is determined by the communication apparatus based on a moment at which random access is initiated to one target candidate cell, and the target candidate cell is one of the at least one candidate cell.

15. The apparatus according to claim 13 or 14, wherein the first indication information further comprises information about a type of the at least one candidate cell, the type comprises a satellite communication network type and/or a non-public network type.

16. The apparatus according to any one of claims 13 to 15, wherein the first indication information further comprises a first preset condition, and the processing module is further used to determine the target candidate base station that meets the preset condition.

17. The apparatus according to any one of claims 13 to 16, wherein the receiving module is further configured to:
receive second indication information sent by the one target candidate cell, wherein the second indication information comprises a second timing advance, and the second timing advance is a positive number or a negative number.

18. The apparatus according to claim 17, wherein the sending module is further configured to:
send third indication information to the one target candidate cell based on a third timing advance, wherein the third indication information comprises a reconfiguration complete message, and the third timing advance is obtained by adding the first timing advance and the second timing advance.

19. The apparatus according to any one of claims 13 to 18, wherein a plurality of candidate cells served by a same base station have a same correspondence.

20. A communication apparatus, comprising:
a sending module, configured to send first indication information to a terminal device, wherein the first indication information comprises a common timing advance of the communication apparatus, and the first indication information is used to inform the terminal device that the at least one candidate cell is in a handover allowed state; and
a receiving module, configured to receive a random access preamble sent by the terminal device based on a first timing advance.

21. The apparatus according to claim 20, wherein the first indication information further comprises:
correspondences between a plurality of common timing advances of the communication apparatus and a plurality of moments.

22. The apparatus according to claim 20 or 21, wherein the first indication information further comprises information about a type of the communication apparatus, the type comprises a satellite communication network type and/or a non-public network type.

23. The apparatus according to any one of claims 20 to 22, wherein the first indication information further comprises a first preset condition, and the preset condition is used by the terminal device to determine a target candidate base station that meets the preset condition.

24. The apparatus according to any one of claims 20 to 23, wherein the sending module is further configured to:
send second indication information to the terminal device, wherein the second indication information comprises a second timing advance, the second timing advance is determined by the communication apparatus based on the random access preamble, and the second timing advance is a positive number or a negative number.

25. A communication apparatus, comprising:
a receiving module, configured to receive first indication information sent by at least one candidate base station, wherein the first indication information comprises a common timing advance of at least one candidate cell, and the first indication information is used to inform the terminal device that the at least one candidate cell is in a handover allowed state; and
a sending module, configured to send the first indication information to the terminal device.

26. The apparatus according to claim 25, wherein the first indication information further comprises:
correspondences between a plurality of common timing advances of the at least one candidate cell and a plurality of moments.

27. The apparatus according to claim 25 or 26, wherein the apparatus further comprises:
a processing module, configured to integrate a plurality of pieces of first indication information sent by a plurality of candidate base stations into one piece of first indication information before the first indication information is sent to the terminal device.

28. The apparatus according to claims 25 to 27, wherein the first indication information further comprises information about a type of the at least one candidate base station, the type comprises a satellite communication network type and/or a non-public network type.

29. The apparatus according to any one of claims 25 to 28, wherein the first indication information further comprises a first preset condition, and the first preset condition is used by the terminal device to determine a target candidate base station that meets the preset condition.
